# EUROPÄISCHE PATENTSCHRIFT

(11) **EP 0 634 360 B1**
(45) Veröffentlichungstag und Bekanntmachung des Hinweises auf die Patenterteilung: **15.10.1997**
(21) Anmeldenummer: 94110622.1
(22) Anmeldetag: 07.07.1994
(51) Int. Cl.: C01B 33/18, B01J 12/02

(54) **Verfahren zur Herstellung von hochdisperser Kieselsäure**
Process for the preparation of highly dispersed silica
Procédé de préparation de silice hautement dispersée

(30) Priorität: 08.07.1993 DE 4322804
(43) Veröffentlichungstag der Anmeldung: 18.01.1995
(73) Patentinhaber: Wacker-Chemie GmbH, 81737 München (DE)
(72) Erfinder: Maginot, Helmut, D-84508 Burgkirchen (DE); Huber, Johann, D-84489 Burghausen (DE)

(56) Entgegenhaltungen:
- DE-A- 1 567 404
- DE-C- 900 339
- DE-U- 9 201 690
- US-A- 3 560 152
- US-A- 4 292 290

## Beschreibung

Die Erfindung betrifft ein verfahren zur Herstellung von hochdisperser Kieselsäure.

Es ist bekannt, feinteiliges Siliciumdioxid (hochdisperse Kieselsäure) durch Umsetzung von gasförmigen oder verdampfbaren Siliciumverbindungen im Gemisch mit unter Wasserbildung verbrennenden Gasen und Luft bzw. Sauerstoff in der Flamme herzustellen.

Bei diesen Verfahren besteht das Problem der Belagbildung an der Wandung der Brennkammer. Die Beläge entstehen durch die Anlagerung der in der Flamme gebildeten Siliciumdioxidteilchen an der Brennkammmerwand und bedingen durch thermische Isolierung eine Beeinflussung der Wärmebilanz in der Brennkammer, die zur Veränderung wichtiger Produkteigenschaften wie z.B. der spezifischen Oberfläche führt. Weiter verursachen sich ablösende Beläge im Produkt Verunreinigungen, die das Material für viele Einsatzbereiche ungeeignet machen.

Im Stand der Technik sind mehrere Vorrichtungen zur Vermeidung der Belagbildung bei der Herstellung von hochdisperser Kieselsäure vorgeschlagen. DE-PS 900 339 beschreibt belüftete Sinterkeramikwände der Brennkammer, die jedoch nur mit erheblichem technischen und finanziellem Aufwand zu verbesserten Ergebnissen führen. DE-PS 31 15 002 bzw. die entsprechende US-A 4,292,290 beschreiben die Ummantelungen der Flamme mit einem kühlenden Luftstrom, die jedoch zur unerwünschten Beeinflussung der Verdickungswirkung der erhaltenen hochdispersen Kieselsäure führt.

Der Erfindung liegt die Aufgabe zugrunde, ein Verfahren zur Verfügung zu stellen, das die Nachteile der Belagbildung an der Brennkammerwand und des Standes der Technik vermeidt sowie Produkte mit verbesserten Eigenschaften liefern.

Gelöst wird diese Aufgabe durch ein Verfahren zur Herstellung von hochdisperser Kieselsäure durch Umsetzung von gasförmigen oder verdampfbaren Siliciumverbindungen im Gemisch mit unter Wasserbildung verbrennenden Gasen und Luft bzw. Sauerstoff in der Flamme, das dadurch gekennzeichnet ist, daß in der Brennkammer mittels zumindest einer Gaskanone Gasentladungen erzeugt werden.

Das erfindungsgemäße Verfahren führt neben verbesserten Produkteigenschaften auch zu größeren Durchsatzmengen, da der Brenner bei höheren Teilchenkonzentrationen betrieben werden kann.

Das erfindungsgemäße Verfahren ist universell in allen Verfahren zur Herstellung von hochdisperser Kieselsäure durch Umsetzung von gasförmigen oder verdampfbaren Siliciumverbindungen im Gemisch mit unter Wasserbildung verbrennenden Gasen und Luft bzw. Sauerstoff in der Flamme anwendbar.

Aus diesem Grund sei hinsichtlich der Ausgangsmaterialien, wie z.B. gasförmige oder verdampfbare Siliciumverbindungen und unter Wasserbildung verbrennenden Gase, der Ausgestaltung der Brenner und Brennerkammern sowie der angewandten Verfahrensparameter beispielsweise auf die folgenden Veröffentlichungen verwiesen:

DE-PS 900 339; DE-PS 31 15 002 bzw. die entsprechende US-A 4,292,290; DE-OS 29 09 815 bzw. die entsprechende GB 2049641; DE-OS 21 53 671 bzw. die entsprechende GB 1412472; DE-OS 27 02 896 bzw. die entsprechende GB 1563272; DE-OS 20 48 220 bzw. die entsprechende US-A 3,663,283; DE-OS 33 38 888.

Die genannten Veröffentlichungen stellen eine beispielhafte Auswahl dar und dienen daher keinesfalls zur Einschränkung der Anwendbarkeit des erfindungsgemäßen Verfahrens.

Üblicherweise werden bei diesem Verfahren gasförmige oder verdampfbare Silane, z. B Chlorsilane wie SiCl₄, SiHCl₃, SiH₂Cl₂, oder Organochlorsilane, wie CH₃SiCl₃, CH₃SiHCl₂, (CH₃)₂SiCl₂, im Gemisch mit unter Wasserbildung verbrennenden Gasen wie beispielsweise Wasserstoff, Methan, Propan und Luft bzw. Sauerstoff in der Flamme umgesetzt.

Diese Verbrennung erfolgt vorzugsweise in einer zylindrischen oder konisch sich in Strömungsrichtung erweiternden Brennkammer aus vorzugsweise Aluminium oder hochlegierten Edelstählen. Um die Brennkammer vor Überhitzung zu schützen, wird sie vorteilhafterweise mit Wasser gekühlt.

Das Gasgemisch wird am Kopf der bevorzugt vertikal angeordneten Brennkammer mittels einer oder mehrerer Brennerdüsen zugeführt. Das Prozeßgas einschließlich des in der Flamme entstehenden Feststoffs wird am anderen Ende der Brennkammer abgesaugt und das Zielprodukt abgetrennt.

Die erfindungsgemäß verwendeten Gaskanonen sind am Markt beispielsweise von der Firma VSR Engineering GmbH Fördertechnik, D-4330 Mühlheim a.d. Ruhr, Hinterbergstraße 319, unter der Typenbezeichnung BIG BLASTER ^{R} Luftkanonen erhältlich und bestehen aus einem Gasspeicher, der durch einen speziell ausgebildeten Öffnungsmechanismus die schlagartige Entspannung des enthaltenen Gases ermöglicht.

Durch Variation dieser Gaskanonen hinsichtlich des Speichervolumens, des Speicherdrucks, der Anzahl pro Brennkammer, der Anordnung an der Brennkammer, des enthaltenen Gases und der Ansteuerung kann die Abreinigung den jeweiligen betrieblichen Anforderungen optimal angepaßt werden.

Die Anzahl der an der Außenwand der Brennkammer angebrachten Gaskanonen ist abhängig von der Größe und Geometrie der eingesetzten Brennkammer. Bei üblicherweise im erfindungsgemäßen Verfahren bzw. bei erfindungsgemäßen Vorrichtungen verwendeten Brennkammern hat es sich bewährt 3 bis 4 Gaskanonen bei einem Speicherdruck von vorzugsweise 4 bis 8 bar, einem Speichervolumen von vorzugsweise 20 bis 150 Liter und einer Häufigkeit der Gasentladungen von vorzugsweise 3 bis 4 Entladungen pro Stunde und Gaskanone, einzusetzen. Als Gase werden vorzugsweise Preßluft oder Stickstoff verwendet.

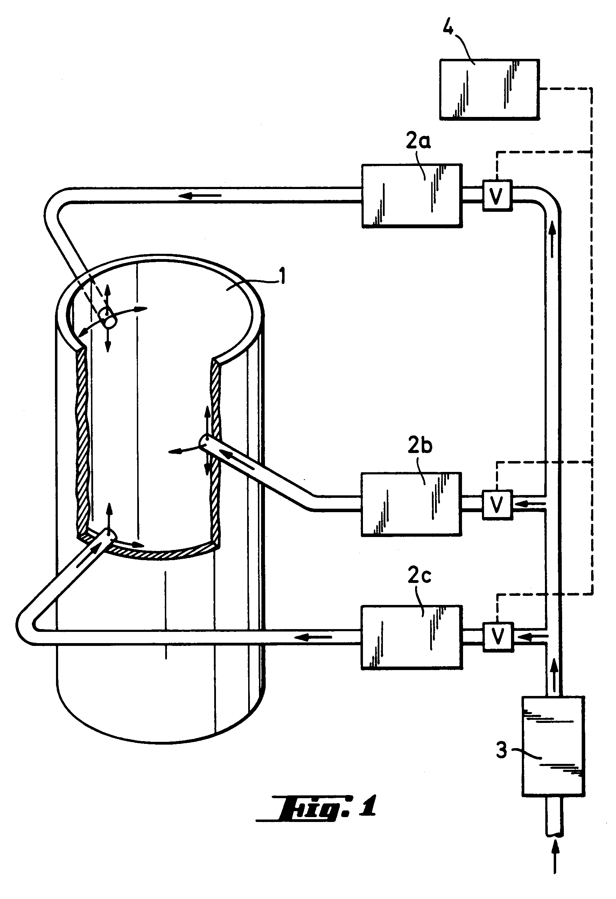

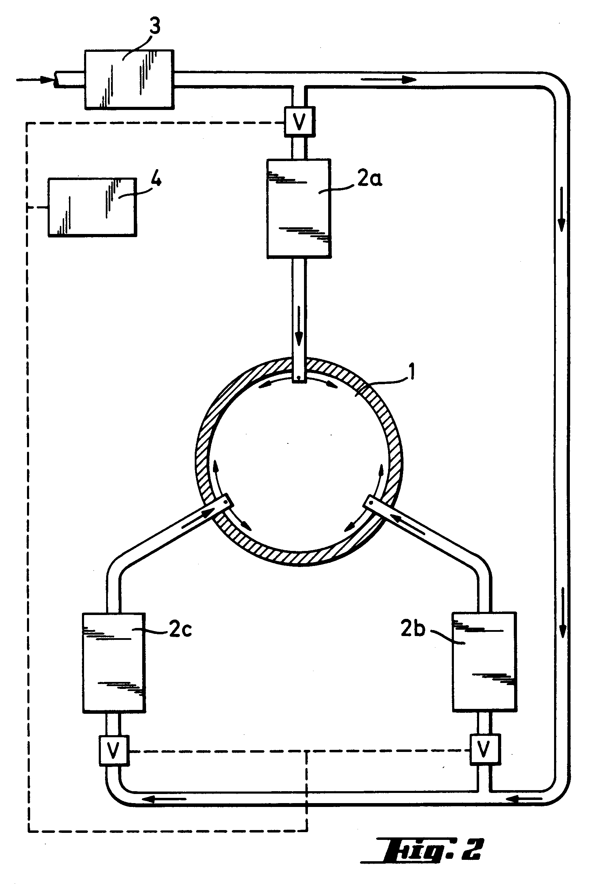

Zur Erläuterung der Anordnung der Gaskanonen an der Brennkammer ist in den Figuren 1 und 2 eine mögliche Ausführungsform dargestellt. Darin bedeuten:
1 Brennkammer
2 a-c Gaskanonen
3 Gaszuführung
4 Steuereinheit

Die vorzugsweise eingesetzten Düsen dienen zur gleichmäßigen Verteilung des sich schlagartig aus der Gaskanone entladenden Gases über die Brennkammerinnenwand. Besonders bewährt haben sich Düsen, in denen das aus der Gaskanone kommende Gas um vorzugsweise 90 - 110 Grad, insbesondere 90 - 95 Grad in Richtung Brennkammerinnenwand umgekehrt wird und über vorzugsweise 1 - 4, insbesondere 3 - 4, Öffnungen gleichmäßig über die Brennkammerinnenwand verteilt wird.

Um ein Abbrennen der Düse bei den in der Brennkammer vorhandenen Temperaturen zu vermeiden, wird vorzugsweise eine Kühlung der Düse insbesondere im Kopfbereich vorgesehen. Vorzugsweise wird als Kühlmedium entsalztes Wasser verwendet.

### Beispiel

Die Komponenten Wasserstoff, Erdgas, Luft und Methyltrichlorsilan wurden als Gemisch einer konzentrisch angeordneten Düse zugeführt, die in die vertikal angeordnete Brennkammer hineinragte.

Es bildete sich eine Flamme, in der die Reaktion erfolgte. Die Flammentemperatur lag im Bereich um 1000°C.

Bei der Umsetzung entstand das Zielprodukt SiO₂.

Die Brennkammer war mit 4 Gaskanonen ausgestattet, die die Ablagerung von SiO₂-Teilchen an der Wandung der Brennkammer unterbanden.

Die Reaktionsprodukte SiO₂, HCl und Wasserdampf wurden gemeinsam mit dem Inertgasanteil und Sauerstoffüberschuß im unteren Brennerbereich abgezogen und der Wärmerückgewinnung bzw. der Feststoffabscheidung zugeführt.

Die spezifische Oberfläche wurde in m²/g angegeben (N₂-Adsorptionsmeßverfahren nach DIN 66 131/66 132). Die Gritmessung erfolgte nach DIN-ISO 787/18.

Es wurde SiO₂ mit folgenden Werten erhalten:
spezifische Oberfläche [m²/g]: 130
Grit [Gew.-%]: 0,002 ± 0,001

### Vergleichsbeispiel

Das Beispiel wurde wiederholt, jedoch ohne die erfindungsgemäßen Gaskanonen und Gasentladungen.

Es wurde SiO₂ mit folgenden Werten erhalten:
spezifische Oberfläche [m²/g]: 130
Grit [Gew.-%]: 0,008 ± 0,001

## Patentansprüche

1. Verfahren zur Herstellung von hochdisperser Kieselsäure durch Umsetzung von gasförmigen oder verdampfbaren Siliciumverbindungen im Gemisch mit unter Wasserbildung verbrennbaren Gasen und Luft bzw. Sauerstoff in der Flamme, dadurch gekennzeichnet, daß in der Brennkammer mittels zumindest einer Gaskanone Gasentladungen erzeugt werden.

2. Verfahren nach Anspruch 1, dadurch gekennzeichnet, daß 3 bis 4 Gaskanonen verwendet werden.

3. Verfahren nach Anspruch 1 oder 2, dadurch gekennzeichnet, daß die Gaskanone in Verbindung mit einer Düse an der Innenseite der Brennkammer verwendet wird.

4. Verfahren nach Anspruch 3, dadurch gekennzeichnet, daß die Düse eine Umkehrung des aus der Gaskanone kommenden Gases um 90 bis 110 Grad bewirkt.

5. Verfahren nach einem oder mehreren der Ansprüche 1 bis 4, dadurch gekennzeichnet, daß 3 bis 4 Gasentladungen pro Stunde und Gaskanone erzeugt werden.

## Claims

1. Process for preparing finely divided silica by reaction of gaseous or vaporizable silicon compounds in a mixture with gases forming water on combustion and air or oxygen in a flame, characterized in that discharges of gas are produced in the combustion chamber by means of at least one gas gun.

2. Process as claimed in Claim 1, wherein 3 or 4 gas guns are used.

3. Process as claimed in Claim 1 or 2, wherein the gas gun is used in conjunction with a nozzle on the inside of the combustion chamber wall.

4. Process as claimed in Claim 3, wherein the nozzle effects a reversal of the gas coming out of the gas gun by from 90 to 110 degrees.

5. Process as claimed in one or more of Claims 1 to 4, wherein 3 or 4 discharges of gas per hour and gas gun are produced.

## Revendications

1. Procédé de préparation de silice hautement dispersée par réaction de composés du silicium gazeux ou évaporables en mélange avec des gaz combustibles avec formation d'eau et de l'air, respectivement de l'oxygène dans la flamme, caractérisé en ce que des décharges de gaz sont produites dans la chambre de combustion à l'aide d'au moins un canon à gaz.

2. Procédé selon la revendication 1, caractérisé en ce que l'on utilise de 3 à 4 canons à gaz.

3. Procédé selon la revendication 1 ou 2, caractérisé en ce que l'on utilise le canon à gaz en combinaison avec une buse sur le côté interne de la chambre de combustion.

4. Procédé selon la revendication 3, caractérisé en ce que la buse a pour effet une inversion de 90 à 110 degrés du gaz sortant du canon à gaz.

5. Procédé selon une ou plusieurs des revendications 1 à 4, caractérisé en ce que de 3 à 4 décharges de gaz sont produites par heure et par canon.
